# EUROPÄISCHE PATENTANMELDUNG

(11) **EP 4 296 075 A1**
(43) Veröffentlichungstag der Anmeldung: **27.12.2023**
(21) Anmeldenummer: 22180723.3
(22) Anmeldetag: 23.06.2022
(51) Int. Cl.: B60C 1/00, C08L 9/06

(54) **KAUTSCHUKMISCHUNGEN ENTHALTEND ETHOXYLIERTEN ALKOHOL**

(71) Anmelder: LANXESS Deutschland GmbH, 50569 Köln (DE)
(72) Erfinder: MOLL, Irene, 41468 Neuss (DE); MEIERS, Michaela, 52076 Aachen (DE); WIEDEMEIER-JARAD, Melanie, 41540 Dormagen (DE); WEIDENHAUPT, Hermann-Josef, 50259 Pulheim (DE)

(57) **Zusammenfassung**

Die Erfindung betrifft Kautschukmischungen, enthaltend neben bestimmten Mengen synthetischem Kautschuk, Füllstoffen und Vernetzer 0,5 bis 10 phr der mindestens einen ethoxylierten Verbindung der Formel (I) RO(CH₂CH₂O)ₓH (I), worin R für Alkyl steht, wobei Alkyl verzweigt oder unverzweigt sein kann, und x für eine ganze Zahl von 1 bis 20 steht, geeignet zur Herstellung von Vulkanisaten mit niedrigem Rollwiderstand.

## Beschreibung

Die Erfindung betrifft neue Kautschukmischungen enthaltend mindestens eine ethoxylierte Verbindung der Formel (I), Verfahren zur deren Herstellung und deren Verwendung zur Herstellung von Kautschukvulkanisaten, die entsprechenden Vulkanisate sowie die Verwendung von mindestens einer ethoxylierten Verbindung der Formel (I) in Kautschukmischungen, -vulkanisaten und daraus erhältlichen Formkörpern zur Reduzierung des Rollwiderstandes von Formkörpern enthaltend diese Vulkanisate, bevorzugt von Reifen.

Die EU hat sich dazu verpflichtet, ihre Treibhausgasemissionen zu verringern, um bis 2050 Klimaneutralität zu erreichen. Die Reduzierung der CO₂-Emissionen des Straßenverkehrs spielt bei der Erreichung dieser Ziele eine große Rolle.

Ein neues EU-Reifenkennzeichnungssystem, das zum 1. Mai 2021 in Kraft getreten ist, basiert auf drei wichtigen Reifeneigenschaften: Rollwiderstand - und damit Kraftstoffeffizienz -, Nasshaftung und externes Rollgeräusch. Das neue EU-Reifenlabel ermöglicht den Verbrauchern, sich bewusst für kraftstoffeffizientere Reifen zu entscheiden.

Kraftstoffeffizientere Reifen tragen zur Verringerung der Emissionen im Straßenverkehr bei. Abhängig vom Rollwiderstand des Reifens reicht die Kraftstoffeffizienz von Klasse A (beste Kraftstoffeffizienz) bis zur Klasse E. Der Kraftstoffverbrauch spielt aus ökonomischer und ökologischer Sicht eine wichtige Rolle. Ein niedriger Kraftstoffverbrauch wirkt sich positiv auf die CO₂ -Bilanz des Fahrzeugs aus, insbesondere bei schweren Nutzfahrzeugen.

Vor diesem Hintergrund suchen die Reifenhersteller nach wirtschaftlichen Möglichkeiten, um die Zielmarke Kraftstoffeffizienz der Klasse A für Reifen zu erreichen.

Der Einsatz von kieselsäurehaltigen Kautschukmischungen für die Herstellung von PKW-Reifenlaufflächen ist bekannt. Dabei trägt die Kieselsäure zu einer guten Eigenschaftskombination von Rollwiderstand, Nassrutschfestigkeit und Abrieb, wie sie für PKW-Reifenlaufflächen gefordert werden, bei. Um die gewünschte Eigenschaftskombination zu erzielen, ist es wichtig, die Kieselsäure gut in der Kautschukmischung zu dispergieren und bei der Vulkanisation optimal an die Kautschukmatrix anzukoppeln

Zur Verbesserung der Verarbeitbarkeit von kieselsäurehaltigen Kautschukmischungen sind weitere Zusatzstoffe möglich, wie beispielsweise Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100% bis 300%) oder auch die Härte der Vulkanisate vermindern, sodass die verstärkende Wirkung des Füllstoffes Einbuße erleidet. Eine zu geringe Härte oder Steifigkeit des Vulkanisates resultiert aber in einem unbefriedigenden Fahrverhalten des Reifens, besonders in Kurven.

Einen wichtigen Hinweis zur Beurteilung des Rollwiderstands gibt der Verlustfaktor tan δ. Je geringer der Verlustfaktor tan δ ist, desto geringer ist auch der Rollwiderstand. Der Verlustfaktor tan δ sollte bei 60 bis 70 °C möglichst niedrig sein, gemäß US 9783658B2 < 0,2, gemäß der EP 2858831A2 < 0,12.

In EP 2858831A2 wird offenbart, dass Kautschukmischungen enthaltend 1 phr 1,6-Bis(N,N-dibenzylthiocarbamoyldithio)hexan (CAS-Nr.: 151900-44-6) und 1 phr bestimmter schwefelhaltiger Additive zu Vulkanisaten mit gutem dynamischen Verhalten, guter Härte/Steifigkeit, gutem Rollwiderstand und zu wenig Abrieb führen. Ein Nachteil ist, dass die Anvulkanisationszeit (Scorch-Zeit, t5) bei Vulkanisation dieser Kautschukmischung deutlich verkürzt wird, was hinsichtlich der Verarbeitungssicherheit von großem Nachteil ist. Aus Sicht der Kautschuk-verarbeitenden Industrie ist es zudem vorteilhafter, nur wenig Mischungskomponenten zu verwenden.

In US 9376551A1 wird der Rollwiderstand durch Zugabe bestimmter Organosiliziumpolysulfide verringert. Die Ergebnisse in Tabelle 2 der US 9376551A1 zeigen, dass 1 phr des Organosilizium-polysulfids den Verlustfaktor (tan δ bei 60°C) um mehr als 10 Prozent verringert. Die mechanischen Eigenschaften wie Zugfestigkeit, Bruchdehnung und Modul 300 blieben dabei nahezu unverändert. Auch hier ist von Nachteil, dass die Anvulkanisationszeit durch Zugabe des Organosilizium-polysulfids drastisch reduziert wird.

Aufgabe der vorliegenden Erfindung war es daher, verbesserte Kautschukmischungen auf Basis eines hydroxylgruppenhaltigen oxidischen Füllstoffs bereit zu stellen, die die zuvor genannten Nachteile überwinden und zu Vulkanisaten und daraus hergestellten Formkörpern wie Reifenlaufflächen führen, die einen niedrigen Rollwiderstand, gemessen durch den Verlustfaktor tan δ bei 60°C, aufweisen, bei nahezu gleichbleibenden Eigenschaften wie Modul 300 und Härte. Bevorzugt sollen die verbesserten Kautschukmischungen auch verkürzte Ausvulkanisationszeiten (t95) aufweisen. Weiter bevorzugt sollen die verbesserten Kautschukmischungen einen niedrigen Rollwiderstand, gemessen durch den Verlustfaktor tan δ bei 60°C, aufweisen, bei gleichbleibendem Modul 300 und Härte.

Ein niedriger Verlustfaktor tan δ bei 60 °C, bestimmt gemäß dynamischer Dämpfung DIN 53513, beträgt bevorzugt kleiner 0,2, besonders bevorzugt kleiner 0,12.

Die Anvulkanisationszeit t5, bestimmt gemäß ASTM D5289-95, bei 130 °C liegt bevorzugt im Bereich von 1000 - 1500 Sekunden, besonders bevorzugt im Bereich von 1300 -1500 Sekunden.

Eine kurze Ausvulkanisationszeit t95 (Umsatzzeit 95%), bestimmt gemäß ASTM D5289-95, bei einer Temperatur von 170 °C ist bevorzugt im Bereich von 500 - 1000 Sekunden.

Für Vulkanisate ist auch ein hoher Modul-300-Wert, insbesondere für die Reifenlaufflächen, vorteilhaft. Bevorzugt beträgt der Modul 300 (bestimmt gemäß DIN 53504) 10 - 25 MPa.

Die Härte, bestimmt gemäß DIN53505, sollte in einem Bereich von 60 - 75 Shore A liegen.

Im Folgenden steht die Einheit "phr" für Gewichtsteile bezogen auf 100 Gewichtsteile der Gesamtmenge an in der Kautschukmischung enthaltenem Kautschuk, d.h. die Gesamtmenge an Synthesekautschuk(en) und Naturkautschuk(en).

Überraschend wird die obige Aufgabe gelöst durch erfindungsgemäße Kautschukmischungen enthaltend
- 50 bis 100 phr mindestens eines Synthesekautschuks, bevorzugt BR -Kautschuk und/oder SBR-Kautschuk,
- 0 bis 50 phr mindestens eines Naturkautschuks,
- 0,1 bis 200 phr mindestens eines hydroxylgruppenhaltigen oxidischen Füllstoffs,
- 0 bis 120 phr mindestens eines Ruß, bevorzugt 0,1 bis 100 phr,
- 0,1 bis 20 phr mindestens eines Vernetzers, bevorzugt ausgewählt aus der Reihe der Schwefelspender und/oder Schwefel,
sowie
0,5 bis 10 phr der mindestens einen ethoxylierten Verbindung der Formel (I)

   RO(CH₂CH₂O)ₓH (I)

   worin
R für Alkyl steht, wobei Alkyl verzweigt oder unverzweigt sein kann,
   und
x für eine ganze Zahl von 1 bis 20
   steht.

Überraschenderweise zeichnen sich die erfindungsgemäßen Vulkanisate, erhalten durch Vulkanisation der erfindungsgemäßen Kautschukmischungen, durch einen niedrigen Verlustfaktor tan δ bei 60 °C aus sowie eine kurze Ausvulkanisationszeit (t95) unter Beibehaltung gleich guter anwendungstechnischer Eigenschaften wie Modul 300, Härte und Vulkanisationsverhalten.

### Kautschuke

Die erfindungsgemäßen Kautschukmischungen enthalten mindestens einen Synthesekautschuk, bevorzugt ausgewählt aus der Gruppe bestehend aus polaren und unpolaren Synthesekautschuken.

Bevorzugte polare und unpolare Synthesekautschuke sind
- BR -: Polybutadien
- ABR -: Butadien/Acrylsäure-C1-C4-alkylester-Copolymerisat
- CR -: Polychloropren
- IR -: Polyisopren
- SBR -: Styrol/Butadien-Copolymerisate mit Styrolgehalten von 1 - 60, vorzugsweise 20-50 Gew-%
- IIR -: Isobutylen/Isopren-Copolymerisate
- NBR -: Butadien/Acrylnitril-Copolymerisate mit Acrylnitrilgehalten von 5-60, vorzugsweise 10-50 Gew.-%
- HNBR -: teilhydrierter oder vollständig hydrierter NBR-Kautschuk
- EPDM -: Ethylen/Propylen/Dien-Copolymerisate
- SIBR -: Styrol-Isopren-Butadien Kautschuk
- ENR -: Epoxidierter Naturkautschuk
- SNBR -: Arcylnitril-Styrol/Butadien Kautschuk
- HNBR -: Hydrierter Arcylnitril/Butadien Kautschuk
- XNBR -: Carboxylisierter Arcylnitril/Butadien Kautschuk
- HXNBR -: Hydrierter carboxylisierter Arcylnitril/Butadien Kautschuk

Bevorzugt ist der mindestens eine Synthesekautschuk ausgewählt aus der Gruppe bestehend aus SBR- und BR-Kautschuk.

Bevorzugt enthalten die erfindungsgemäßen Kautschukmischungen mindestens einen SBR-Kautschuk und/oder einen BR-Kautschuk, besonders bevorzugt einen SBR- und einen BR-Kautschuk.

Der SBR-Kautschuk kann ein funktionalisierter SBR-Kautschuk sein.

Unter funktionalisiertem SBR-Kautschuk ist ein SBR-Kautschuk zu verstehen, der an der Hauptkette und/oder an den Endgruppen durch eine oder mehrere funktionelle Gruppen, insbesondere Carboxylgruppen und/oder Mercaptan-haltige Gruppen, substituiert ist.

In einer bevorzugten Ausführungsform enthalten die erfindungsgemäßen Kautschukmischungen mindestens einen funktionalisierten SBR-Kautschuk und ggfs. einen oder mehrere BR-Kautschuke.

Die erfindungsgemäßen Kautschukmischungen enthalten 50 bis 100 phr mindestens eines Synthesekautschuks, bevorzugt 70-100 phr.

Die erfindungsgemäßen Kautschukmischungen enthalten bevorzugt mindestens einen SBR- und mindestens einen BR-Kautschuk im Gewichtsverhältnis SBR:BR von 100:0 bis 0:100, besonders bevorzugt von 90:10 bis 10:90, ganz besonders bevorzugt von 90:10 bis 50:50, ganz ganz besonders bevorzugt von 80:20 bis 60:40.

In einer alternativen vorteilhaften Ausführungsform enthalten die erfindungsgemäßen Kautschukmischungen mindestens einen Naturkautschuk. Die erfindungsgemäßen Kautschukmischungen können 0 bis 50 phr Naturkautschuk enthalten, bevorzugt 0-30 phr.

### Ethoxylierte Verbindung der Formel (I)

Die erfindungsgemäßen Kautschukmischungen enthalten mindestens eine ethoxylierte Verbindung der Formel (I)

RO(CH₂CH₂O)ₓH (I)

worin
R für Alkyl steht, wobei Alkyl verzweigt oder unverzweigt sein kann,
   und
x für eine ganze Zahl von 1 bis 20
steht.

Bevorzugt steht R für C₁-C₂₀-Alkyl, besonders bevorzugt für C₅-C₁₇-Alkyl, ganz besonders bevorzugt für C₁₀-C₁₅-Alkyl, ganz ganz besonders bevorzugt für *iso*-C₁₃-Alkyl, meist bevorzugt für *iso*-C₁₃H₂₇.

Bevorzugt steht x für eine ganze Zahl von 2 bis 15, besonders bevorzugt von 3 bis 10, ganz besonders bevorzugt von 4 bis 6, meist bevorzugt ist x gleich 5 .

Eine mindestens eine ethoxylierte Verbindung der Formel (I) ist beispielsweise in LUTENSOL^{®} TO 5 der Fa. BASF enthalten.

Die erfindungsgemäßen Kautschukmischungen enthalten die mindestens eine ethoxylierte Verbindung der Formel (I) im Allgemeinen in einer Menge von 0,5 bis 10,0 phr, bevorzugt von 1,0 bis 8,0 phr, besonders bevorzugt von 2,0 bis 7,0 phr und ganz besonders bevorzugt von 4,0 bis 6,0 phr.

### Füllstoffe

Der mindestens eine hydroxylgruppenhaltige oxidische Füllstoff ist bevorzugt ausgewählt aus der Gruppe bestehend aus Kieselsäuren, synthetischen Silikaten und natürlichen Silikaten.

Der Gehalt an hydroxylgruppenhaltigen oxidischen Füllstoffen in den erfindungsgemäßen Kautschukmischungen beträgt 0,1 bis 200 phr, bevorzugt 20 bis 160 phr, besonders bevorzugt 25 bis 140 phr und ganz besonders bevorzugt 30 bis 120 phr.

Als hydroxylgruppenhaltige oxidische Füllstoffe eignen sich bevorzugt solche aus der Reihe der
- Kieselsäuren, insbesondere mit einer spezifischen Oberfläche (BET) von 5 bis 1000, vorzugsweise 20 bis 400 m²/g, vorzugsweise mit Primärteilchengrößen von 100 bis 400 nm, wobei die Kieselsäuren gegebenenfalls auch als Mischoxide mit anderen Metalloxiden, wie AI-, Mg-, Ca-, Ba-, Zr-, Ti-oxiden vorliegen,
- synthetischen Silikate, wie Aluminiumsilikat, Erdalkalisilikate wie Magnesiumsilikat oder Calciumsilikat, mit spezifischen Oberflächen (BET) von 20 bis 400 m²/g, vorzugsweise mit Primärteilchengrößen von 10 bis 400 nm
und
- natürlichen Silikate, wie Kaolin und andere natürliche vorkommende Kieselsäuren, sowie Mischungen davon.

Die oben genannten BET Oberflächen werden gemäß DIN ISO 9277 bestimmt. Die Größenangaben der Primärteilchengrößen basieren auf Messungen mit einem Prüfgerät zur Partikelanalyse mittels Streulicht. Die Berechnung der Partikelgröße basiert dabei auf der Mie-Theorie, welche die Wechselwirkung zwischen Licht und Materie beschreibt (DIN/ISO 13320).

Bevorzugt sind die Kieselsäuren durch Fällung von Lösungen von Silikaten oder Flammenhydrolyse von Siliciumhalogeniden erhältlich.

Bevorzugt enthalten die erfindungsgemäßen Kautschukmischungen mindestens einen hydroxylgruppenhaltigen oxidischen Füllstoff aus der Reihe der Kieselsäuren, insbesondere mit einer spezifischen Oberfläche (BET) im Bereich von 5 bis 1000, bevorzugt 20 bis 400 m ²/g in einer Menge von 0,1 bis 200 phr, bevorzugt 20 bis 160 phr , besonders bevorzugt von 25 bis 140 phr, ganz besonders bevorzugt 30 - 120 phr.

Die erfindungsgemäßen Kautschukmischungen können als Füllstoff mindestens einen Ruß enthalten.

In einer bevorzugten Ausführungsform enthalten die erfindungsgemäßen Kautschukmischungen als Füllstoff mindestens einen Ruß.

Bevorzugt enthalten die erfindungsgemäßen Kautschukmischungen mindestens einen Ruß in einer Menge von 0,1 bis 120 phr, bevorzugt 0,1 bis 100 phr, besonders bevorzugt 1 bis 70 phr, ganz besonders bevorzugt 2 bis 40 phr.

Bevorzugt sind Ruße, die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße. Bevorzugt enthalten die erfindungsgemäßen Kautschukmischungen mindestens einen Ruß mit einer spezifische Oberfläche (BET) im Bereich von 20 bis 200 m²/g .

Besonders bevorzugt enthalten die erfindungsgemäßen Kautschukmischungen als Füllstoffe mindestens eine der oben genannten Kieselsäuren und mindestens einen der oben genannten Ruße.

Ganz besonders bevorzugt enthalten die erfindungsgemäßen Kautschukmischungen als Füllstoffe 25 bis 140 phr, bevorzugt 30 bis 120 phr, mindestens eine der oben genannten Kieselsäuren und 1,0 bis 70 phr, bevorzugt 2,0 bis 40 phr, mindestens einen der oben genannten Ruße.

Die Gesamtmenge an Ruß und kieselsäurebasierenden Füllstoffen in der erfindungsgemäßen Kautschukmischung beträgt bevorzugt 26 bis 210 phr, besonders bevorzugt 32 bis 160.

### Vernetzer und Vulkanisationsbeschleuniger

Die erfindungsgemäßen Kautschukmischungen können einen oder mehrere Vernetzer enthalten.

Bevorzugt enthalten die erfindungsgemäßen Kautschukmischungen mindestens einen Vernetzer aus der Reihe Schwefel und Schwefelspender.

Schwefel kann in elementarer löslicher oder unlöslicher Form eingesetzt werden.

Besonders bevorzugt enthalten die erfindungsgemäßen Kautschukmischungen mindestens einen Schwefelspender und/oder Schwefel, ganz besonders bevorzugt Schwefel.

Als Schwefelspender kommen beispielsweise Dimorpholyldisulfid (DTDM), 2-Morpholinodithiobenzothiazol (MBSS), Caprolactamdisulfid, Dipentamethylen-thiuramtetrasulfid (DPTT), Tetramethylthiuramdisulfid (TMTD) und Tetrabenzyl-thiuramdisulfid (TBzTD) in Frage.

Die erfindungsgemäßen Kautschukmischungen enthalten im Allgemeinen 0,1 bis 20 phr, bevorzugt 0,5 bis 10 phr und besonders bevorzugt von 1,0 bis 8 phr des mindestens einen Vernetzers aus der Reihe Schwefel und Schwefelspender.

In einer besonders bevorzugten Ausführungsform erhalten die erfindungsgemäßen Kautschukmischungen 0,1 bis kleiner als 1,8 phr, ganz besonders bevorzugt 1,0 bis 1,7 phr, ganz ganz besonders bevorzugt 1,3 bis 1,7 phr an Schwefel in dem mindestens einen Vernetzer.

In einer alternativen besonders bevorzugten Ausführungsform erhalten die erfindungsgemäßen Kautschukmischungen 1,8 bis 20 phr, ganz besonders bevorzugt 1,9 bis 8,0 phr, ganz ganz besonders bevorzugt 1,9 bis 5 phr, meist bevorzugt 1,9 bis 3 phr an Schwefel in dem mindestens einen Vernetzer.

Diese zuletzt genannte Ausführungsform löst die zusätzliche Aufgabe, verbesserte Kautschukmischungen bereit zu stellen, die einen besonders niedrigen Rollwiderstand aufweisen, gemessen durch den Verlustfaktor tan δ bei 60 °C, bei gleichbleibendem Modul 300 und Härte.

Durch den Begriff "phr an Schwefel in dem mindestens einen Vernetzer" in den beiden zuvor genannten Ausführungsformen wird ausgedrückt, dass sich die zuvor angegebenen phr Schwefel auf die Menge an Schwefel in dem mindestens einen Vernetzer beziehen und demnach auch auf Schwefel, der in Form eines Schwefelspenders eingesetzt wird.

Zinkoxid kann in den erfindungsgemäßen Kautschukmischungen zugegen sein. Es ist ein Komplexbildner für Schwefel und Schwefelspender und vereinfacht so die Anbindung des Schwefels an die Kautschukmatrix.

Bevorzugte erfindungsgemäße Kautschukmischungen enthalten Zinkoxid mit einer BET-Oberfläche von 2 bis 100 m²/g, bevorzugt 2 bis 70 m²/g. BET-Oberflächen von Zinkoxid können gemäß DIN ISO 9277 gemessen werden.

Im Allgemeinen ist Zinkoxid in einer Menge von 0 bis 20 phr, bevorzugt von 0,1 bis 10 phr, besonders bevorzugt von 1 bis 5 phr in den erfindungsgemäßen Kautschukmischungen enthalten.

Die erfindungsgemäßen Kautschukmischungen können einen oder mehrere Vulkanisationsbeschleuniger enthalten.

Bevorzugt enthalten die erfindungsgemäßen Kautschukmischungen mindestens einen Vulkanisationsbeschleuniger, besonders bevorzugt aus der Gruppe der Mercaptobenzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)benzol und ganz besonders bevorzugt aus der Gruppe der Sulfenamide, ganz besonders bevorzugt N-Cyclohexylbenzothia-zolsulfenamid (CAS-Nr.: 95-33-0).

Die erfindungsgemäßen Kautschukmischungen enthalten im Allgemeinen 0,1 bis 20 phr, bevorzugt 0,5 bis 10 phr und besonders bevorzugt 1,0 bis 5 phr an mindestens einem der genannten Vulkanisationsbeschleuniger.

Bevorzugt enthalten die erfindungsgemäßen Kautschukmischungen mindestens einen Vernetzer und mindestens einen Vulkanisationsbeschleuniger.

Besonders bevorzugt enthalten die erfindungsgemäßen Kautschukmischungen mindestens einen Vernetzer aus der Reihe Schwefel und Schwefelspender und mindestens einen Vulkanisationsbeschleuniger aus der Reihe der Merkaptobenzothiazole, Thiazolsulfenamide, Thiurame, Dithiocarbamate, Xanthogenate und Thiophosphate, besonders bevorzugt der Sulfenamide, ganz besonders bevorzugt N-Cyclohexylbenzothiazolsulfenamide (CAS-Nr.: 95-33-0).

Besonders bevorzugt enthalten die erfindungsgemäßen Kautschukmischungen mindestens einen Vernetzer ausgewählt aus der Gruppe bestehend aus Schwefel und Schwefelspender, mindestens einen Vulkanisationsbeschleuniger ausgewählt aus der Gruppe bestehend aus Merkaptobenzothiazole, Thiazolsulfenamide, Thiurame, Dithiocarbamate, Xanthogenate und Thiophosphate, besonders bevorzugt der Sulfenamide, ganz besonders bevorzugt N-Cyclohexylbenzothiazol-2-sulfenamide (CAS-Nr.: 95-33-0) sowie Zinkoxid.

Die Gesamtmenge an Vernetzer und Vulkanisationsbeschleuniger in den Kautschukmischungen beträgt bevorzugt 1,0 bis 20 phr, besonders bevorzugt von 2,0 bis 13 phr.

### Verstärkungsadditive

Die erfindungsgemäßen Kautschukmischungen können ein oder mehrere Verstärkungsadditive enthalten.

Vorzugsweise enthalten die erfindungsgemäßen Kautschukmischungen mindestens ein Verstärkungsadditiv aus der Reihe der schwefelhaltigen organischen Silane, insbesondere der Alkoxysilylgruppen-haltigen schwefelhaltigen Silane und ganz besonders bevorzugt der Trialkoxysilylgruppen-haltigen schwefelhaltigen organischen Silane.

Besonders bevorzugt enthalten die erfindungsgemäßen Kautschukmischungen ein oder mehrere schwefelhaltige Silane aus der Reihe Bis-(triethoxysilylpropyl)-tetrasulfan, Bis-(triethoxysilylpropyl -disulfan und 3-(Triethoxysilyl)-1-propanthiol.

Flüssige schwefelhaltige Silane können zur besseren Dosierbarkeit und/oder Dispergierbarkeit auf einem Träger aufgezogen werden (dry liquid). Der Gehalt an schwefelhaltigen Silanen in diesen "dry liquids" liegt bevorzugt zwischen 30 und 70 Gew.-Teilen, besonders bevorzugt zwischen 40 und 60 Gew.-Teilen je 100 Gew.-Teile dry liquid.

Die erfindungsgemäßen Kautschukmischungen enthalten im Allgemeinen 0,1 bis 20 phr, vorzugsweise 0,5 bis 15 phr und besonders bevorzugt 1,0 bis 10 phr an mindestens einem Verstärkungsadditiv.

### Kautschukhilfsmittel

Die erfindungsgemäßen Kautschukmischungen können weiterhin ein oder mehrere Kautschukhilfsmittel enthalten. Als Kautschukhilfsmittel kommen beispielsweise Alterungsschutzmittel, Haftmittel Wärmestabilisatoren, Lichtschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren wie Steearinsäure, Verzögerer, insbesondere Triethanolamin, Polyethylenglykol, Hexantriol, und Reversionsschutzmittel sowie Sekundärbeschleuniger in Frage.

Diese Kautschukhilfsmittel können den erfindungsgemäßen Kautschukmischungen in den für diese Hilfsmittel üblichen Mengen, die sich auch nach dem Verwendungszweck der daraus hergestellten Vulkanisate richten, zugesetzt werden. Übliche Mengen sind beispielsweise 0,1 bis 30 phr.

Die erfindungsgemäßen Kautschukmischungen können ein oder mehrere Alterungsschutzmittel enthalten. Als solche geeignet sind aminische Alterungsschutzmittel wie z. B. Diaryl-p-phenylendiaminen (DTPD), octyliertes Diphenylamin (ODPA), Phenyl-α-naphthylamin (PAN), Phenyl-ß-naphthylamin (PBN), vorzugsweise solche auf Phenylendiaminbasis, z. B. N,N'-Dicyclohexyl-p-phenylendiamin (CCPD), N-Isopropyl-N'-phenyl-p-phenylendiamin, N-1,3-Dimethylbutyl-N'-phenyl-p-phenylen-diamin (6PPD), N-1,4-Dimethylpentyl-N'-phenyl-p-phenylendiamin (7PPD), N,N'-bis-(1,4-Dimethylpentyl)-p-phenylendiamin (77PD) sowie Phosphite wie Tris-(nonylphenyl)phosphit, polymerisiertes 2,2,4-Trimethyl-1,2-dihydrochinolin (TMQ), Methyl-2-Mercapto-benzimidazol (MMBI) und Zinkmethylmercaptobenzimidazol (ZMMBI) sowie Mischungen davon. Besonders bevorzugt wird das mindestens eine Alterungsschutzmittel ausgewählt aus der Gruppe bestehend aus N,N'-Dicyclohexyl-p-phenylendiamin (CCPD) und N-1,3-Dimethylbutyl-N'-phenyl-p-phenylen-diamin (6PPD).

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C-Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, können die erfindungsgemäße Kautschukmischungen Flammschutzmittel enthalten. Hierfür werden beispielsweise Antimontrioxid, Phosphorsäureester, Chlorparaffin, Aluminiumhydroxid, Borverbindungen, Zinkverbindungen ausgenommen ZnO, Molybdäntrioxid, Ferrocen, Calciumcarbonat oder Magnesiumcarbonat verwendet.

Vor der Vernetzung können der erfindungsgemäßen Kautschukmischungen auch weitere Kunststoffe beigefügt werden, die beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftmittel basieren auf Resorcin, Formaldehyd und Silica, die sogenannten RFS-Direkthaftsysteme. Diese Direkthaftsysteme können in beliebiger Menge der erfindungsgemäßen Kautschukmischung zu jedem Zeitpunkt des Einmischens in die erfindungsgemäßen Kautschukmischungen, eingesetzt werden.

In Kieselsäure-basierten Kautschukmischungen, wie sie bevorzugt zur Reifenherstellung eingesetzt werden, wird typischerweise Diphenylguanidin (DPG) oder werden strukturähnliche aromatische Guanidine als Sekundärbeschleuniger eingesetzt.

Dem Fachmann ist bekannt, dass DPG durch 1,6-bis(N,N-dibenzylthiocarbamoyldithio)-hexan, auch unter dem Handelsname Vulcuren^{®} bekannt, vorteilhaft substituiert werden kann. Ein Ersatz von DPG durch einen Sekundärbeschleuniger wie TBzTD (Tetrabenzylthiuramdisulfid) oder Dithiophosphate ist auch möglich.

Die erfindungsgemäßen Kautschukmischungen enthalten im Allgemeinen 0 oder von 0,1 bis 10 phr, bevorzugt 0,5 bis 5 phr, besonders bevorzugt 0,2 bis 3,5 phr an mindestens einem der genannten Sekundärbeschleuniger.

Besonders bevorzugt sind erfindungsgemäße Kautschukmischungen enthaltend
- 50 bis 100 phr mindestens eines synthetischen Kautschuks, insbesondere BR - Kautschuk und/oder SBR-Kautschuk,
- 20 bis 160 phr mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm,
- 0,1 bis 100 phr mindestens eines Ruß, insbesondere mit einer spezifische Oberfläche (BET) im Bereich von 20 bis 200 m²/g,
- 0,5 bis 10 phr mindestens eines Vernetzer, insbesondere aus der Reihe der Schwefelspender und/oder Schwefel,
- 0,1 bis 10 phr Zinkoxid,
- 0,5 bis 10 phr mindestens eines Vulkanisationsbeschleunigers, insbesondere aus der Reihe der Sulfenamide,
- 0,1 bis 10,0 phr mindestens eines Sekundärbeschleunigers,
- 0,5 bis 15 phr mindestens eines Verstärkungsadditives, insbesondere aus der Gruppe der schwefelhaltigen Silane
- 0,1 bis 30 phr Kautschukhilfsmittel
   und
- 0,5 bis 10,0 phr der mindestens einen ethoxylierten Verbindung der Formel (I).

Die oben genannten weiteren Vorzugsbereiche der einzelnen Komponenten gelten auch für diese bevorzugten Mischungen.

### Verfahren zur Herstellung der Kautschukmischungen

Ein weiterer Gegenstand der vorliegenden Erfindung ist ein Verfahren zur Herstellung der erfindungsgemäßen Kautschukmischungen, dadurch gekennzeichnet, dass in einem Mischprozess die jeweiligen Komponenten gemischt werden. Bevorzugt werden mindestens ein Synthesekautschuk, gegebenenfalls mindestens ein Naturkautschuk, und mindestens eine ethoxylierte Verbindung der Formel (I), gegebenenfalls in Gegenwart von mindestens einem Füllstoff, gegebenenfalls mindestens einem Vernetzer, gegebenenfalls mindestens einem Vulkanisationsbeschleuniger, gegebenenfalls Zinkoxid, gegebenenfalls mindestens einem Sekundärbeschleuniger, gegebenenfalls mindestens einem Verstärkungsadditiv und gegebenenfalls einem oder mehreren der genannten Kautschukhilfsmittel in den für diese Zusatzstoffe genannten allgemeinen und bevorzugten Mengen bei einer Temperatur im Bereich von 30 bis 170°C, besonders bevorzugt von 140 bis 160°C, miteinander vermischt.

Die Herstellung der erfindungsgemäßen Kautschukmischungen erfolgt in üblicher Weise in bekannten Mischaggregaten, wie Walzen, Innenmischern, nachgeschalteten Mischwalzwerken und Mischextrudern bei Scherraten von 1 bis 1000 sec⁻¹.

Bevorzugt erfolgt die Herstellung der erfindungsgemäßen Kautschukmischungen in einem zweistufigen Mischprozess. In einer ersten Mischstufe werden zunächst die Füllstoffe sowie die mindestens eine ethoxylierte Verbindung der Formel (I) sowie ggfs. weitere oben genannte Kautschukhilfsmittel in einem Innenmischer (Kneter) in den Kautschuk eingearbeitet. Mischtemperaturen im Innenmischer können Werte bis zu 170°C erreichen. Die Mischtemperatur im Innenmischer beträgt bevorzugt 130 bis 170°C, besonders bevorzugt 140 bis 160°C.

Danach erfolgt bevorzugt das sogenannte Nachzwicken, bevorzugt bei 130 - 170°C, besonders bevorzugt bei 150°C. Das Nachzwicken kann beispielsweise in einem Kneter oder Innenmischer erfolgen.

In einer zweiten Mischstufe werden Vernetzer, Vulkanisationsbeschleuniger und ggfs. weitere oben genannte Kautschukhilfsmittel, bevorzugt Sekundärbeschleuniger und Alterungsschutzmittel, zu der aus der ersten Mischstufe erhaltenen Mischung gegeben. Die Mischtemperatur in der zweiten Mischstufe beträgt vorzugsweise 50 - 150°C, bevorzugt 55 - 140°C, insbesondere von 60 bis 130°C.

Bevorzugt wird die zweite Mischstufe auf einem Walzwerk durchgeführt, welches mit Wasser temperierte Walzen enthält. Dies ermöglicht eine geringere Mischtemperatur als in der ersten Mischstufe.

Die Zugabe der mindestens einen ethoxylierten Verbindung der Formel (I) kann zu jedem Zeitpunkt des Mischens erfolgen, vorzugsweise im ersten Schritt des Mischvorgangs bei einer Temperatur im Bereich von 130°C bis 170 °C, bevorzugt bei einer Temperatur von 140 bis 160°C.

Die mindestens eine ethoxylierte Verbindung der Formel (I) kann sowohl in reiner Form als auch auf einen inerten, organischen oder anorganischen Träger, vorzugsweise einen Träger ausgewählt aus der Gruppe enthaltend natürliche oder synthetische Silikate, insbesondere neutrales, acides oder basisches Silica, Aluminiumoxid, Ruß oder Zinkoxid aufgezogen und/oder daran adsorbiert in den Mischprozess eingesetzt werden.

### Haftmischungen

Weiterer Gegenstand der vorliegenden Erfindung sind Haftmischungen enthaltend eine erfindungsgemäße Kautschukmischung und mindestens ein Haftmittel.

Die erfindungsgemäßen Haftmischungen enthalten vorzugsweise mindestens ein Haftmittel basierend auf Resorcin, Formaldehyd und Kieselsäure.

Kombinationen aus Resorcin, Formaldehyd und Kieselsäure (Silica) sind als sogenannte RFS- Direkthaftsysteme aus dem Stand der Technik bekannt. Die erfindungsgemäßen Haftmischungen können diese Direkthaftsysteme in beliebiger Menge enthalten.

Die erfindungsgemäßen Haftmischungen können hergestellt werden in bekannter Weise durch Mischen einer erfindungsgemäßen Kautschukmischung mit mindestens einem Haftmittel basierend auf Resorcin, Formaldehyd und Kieselsäure.

In den Haftmitteln kann das Formaldehyd in Form von Formaldehyd-Spendern vorliegen. Als Formaldehyd-Spender eignen sich neben Hexamethylentetramin auch Methylolaminderivate.

Den erfindungsgemäßen Haftmischungen können zur Haftverbesserung eine oder mehrere, zur Kunstharzbildung befähigten Komponenten wie Phenol und/oder Amine und/oder Aldehyde oder Aldehyde abspaltende Verbindungen zugesetzt werden.

### Verfahren zur Herstellung der Kautschukvulkanisate

Die vorliegende Erfindung betrifft weiterhin ein Verfahren zur Herstellung von Kautschukvulkanisaten, dadurch gekennzeichnet, dass die erfindungsgemäße Kautschukmischung bei Temperaturen von 120 bis 200°C, bevorzugt bei 140 bis 180°C erhitzt wird.

Das Verfahren zur Herstellung der erfindungsgemäßen Kautschukvulkanisate kann in einem weiten Druckbereich durchgeführt werden, bevorzugt wird es bei einem Druck im Bereich von 10 bis 200 bar durchgeführt.

Weiterer Gegenstand der vorliegenden Erfindung sind Kautschukvulkanisate, die erhältlich sind durch Vulkanisation der erfindungsgemäßen Kautschukmischungen.

Die erfindungsgemäßen Kautschukvulkanisate weisen insbesondere bei Anwendung in Reifen einen unerwartet niedrigen Rollwiderstand auf, bei vergleichbaren anwendungstechnischen Eigenschaften.

Der Rollwiderstand wird im Rahmen dieser Erfindung bestimmt über den Verlustfaktor tan δ bei 60°C gemäß dynamischer Dämpfung DIN 53513.

### Formkörper

Die erfindungsgemäßen Kautschukvulkanisate eignen sich zur Herstellung von Formkörpern aller Art wie z.B. Reifenbauteilen, technischen Gummiartikeln wie Dämpfungselementen, Walzenbelägen, Belägen von Förderbändern, Riemen, Spinnkopsen, Dichtungen, Golfballkernen, Schuhsohlen, insbesondere eignen sie sich zur Herstellung von Reifen und Reifenteilen, wie Reifenlaufflächen, Subtreads, Karkassen Seitenwänden von Reifen, verstärkten Seitenwänden für Notlaufreifen und Apexmischungen. Reifenlaufflächen schließen dabei auch Laufflächen von Sommer-, Winter- und All-Seasons-Reifen sowie Laufflächen von PKW- und LKW-, Leicht-LKW-Reifen ein.

Bevorzugte Formkörper sind Reifen und Reifenteile enthaltend ein erfindungsgemäßes Kautschukvulkanisat.

Weiterer Gegenstand der vorliegenden Erfindung ist die Verwendung der mindestens einen ethoxylierten Verbindung der Formel (I) zur Herstellung von Vulkanisaten mit niedrigem Rollwiderstand aus schwefelvernetzbaren Kautschukmischungen, insbesondere in einer Menge von 0,5 bis 10,0 phr bei einer Vulkanisationstemperatur von 120 bis 200°C.

Weiterer Gegenstand der vorliegenden Erfindung ist die Verwendung der mindestens einen ethoxylierten Verbindung der Formel (I) in Kautschukmischungen, -vulkanisaten und daraus erhältlichen Formkörpern zur Reduzierung des Rollwiderstandes von Formkörpern aus Kautschukvulkanisaten, bevorzugt von Reifen und Reifenteilen.

Die für die in der erfindungsgemäßen Kautschukmischung enthaltenen und gegebenenfalls enthaltenen Komponenten, wie den mindestens einen Synthesekautschuk, den mindestens einen Naturkautschuk, den mindestens einen hydroxylgruppenhaltigen oxidischen Füllstoff, den mindestens einen Ruß, den mindestens einen Vernetzer, den mindestens einen Vulkanisationsbeschleuniger, das Zinkoxid, den mindestens einen Sekundärbeschleuniger, das mindestens eine Verstärkungsadditive, die Kautschukhilfsmittel und die mindestens eine ethoxylierte Verbindung der Formel (I), angeführten Beschreibungen und Vorzugsbereiche gelten für u.a. die offenbarten Verfahren und Verwendungen sowie die Vulkanisate, Formkörper und Haftmischungen analog.

Ebenso gelten die angeführten Beschreibungen und Vorzugsbereiche für u.a. die erfindungsgemäßen Kautschukmischungen, Vulkanisate, Formkörper, Haftmischungen Verfahren und Verwendungen unabhängig davon, ob sie für vorgenannte im Plural (z.B. Kautschukmischungen) oder im Singular (z.B. Kautschukmischung) offenbart wurden.

Die Erfindung soll anhand der folgenden Beispiele erläutert werden, ohne diese jedoch darauf zu beschränken.

### Ausführungsbeispiele

**Tabelle 1: Liste der Einsatzstoffe, Abkürzungen und Hersteller**

| Handelsname | Erläuterung | Hersteller/Vertrieb |
|---|---|---|
| BUNA^{®} CB 24 | Neodymium Butadiene Rubber (BR) | Arlanxeo Deutschland GmbH |
| BUNA^{®} VSL 4526-2 HM | Styrol-butadien-Kautschuk (SBR) (ölverstreckt, Öl-Gehalt 27,3 Gew.-%) | Arlanxeo Deutschland GmbH |
| CORAX^{®} N 339 | Ruß | Degussa-Evonik GmbH |
| TUDALEN^{®} 1849-TE | Prozess-Öl | Hansen & Rosenthal (H&R GRUPPE) |
| PALMERA^{®} A9818 | Stearinsäure | KLK OLEO |
| ANTILUX^{®} 654 | Wachs | Lanxess Deutschland GmbH |
| VULKACIT^{®} CZ/C | N-Cyclohexyl-2-benzothiazol-sulfenamid | Lanxess Deutschland GmbH |
| Avozinc-Rotsiegel (Pulver) | Zinkoxid | Avokal^{®} GmbH |
| MAHLSCHWEFEL 90/95 CHANCEL | Schwefel | Solvay Deutschland GmbH |
| VULKANOX^{®} 4020/LG | *N*-1,3-Dimethylbutyl-*N'*-phenyl-p-phenylendiamin | Lanxess Deutschland GmbH |
| VULKASIL^{®} S | Kieselsäure | Lanxess Deutschland GmbH |
| VULKANOX^{®} HS | 2,2,4-trimethyl-1,2-dihydroquinoline, polymerisiert (TMQ) | Lanxess Deutschland GmbH |
| SI^{®} 69 | Bis-(triethoxysilylpropyl)-tetrasulfan | Evonik Resource Efficiency GmbH |
| RHENOGRAN^{®} DPG-80 | *N,N'*-Diphenylguanidine (Polymer gebunden; 80% DPG enthaltend) | Lanxess Deutschland GmbH |
| LUTENSOL^{®} TO 5 | ethoxyliertes Isotridecanol | BASF |

### Herstellung der Kautschukvulkanisate

Es wurden die Kautschukmischungen des nicht erfindungsgemäßen Beispiels 1 entsprechend der Zusammensetzung der Referenzmischung aus EP2858831A1 sowie der erfindungsgemäßen Beispiele 2 und 3 gemäß den in Tabelle 1 angegeben Rezepturen hergestellt.

Die Herstellung der Kautschukmischungen erfolgte in folgenden Schritten:

### 1. Mischstufe:

▪ BUNA^{®} CB 24 und BUNA^{®} VSL 4526-2 HM werden in einem Innenmischer vorgelegt und ca. 30 Sekunden gemischt
▪ Zugabe zweidrittel VULKASIL^{®} S, zweidrittel SI^{®} 69 mischen für ca 60 Sekunden
▪ Zugabe eindrittel VULKASIL^{®} S, eindrittel SI^{®} 69, sowie TUDALEN^{®} 1849-TE, mischen ca. 60 Sekunden

Zugabe von CORAX^{®} N 339, PALMERA^{®} A9818, VULKANOX^{®} 4020/LG, VULKANOX^{®} HS, ZINKOXID (ROTSIEGEL), LUTENSOL^{®} TO 5, mischen für ca. 60 Sekunden.

Dieser Mischungsvorgang erfolgte bei einer Temperatur von 150°C.

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

Verarbeitungstemperaturen liegen hierbei bei 70°C.

Danach erfolgte ein Mischen bei 150°C in einem Kneter /Innenmischer (das sogenannte Nachzwicken).

### 2. Mischstufe:

Die Zugabe von Zusatzstoffen wie dem MAHLSCHWEFEL 90/95 CHANCEL, VULKACIT^{®} CZ/C, Rhenogran^{®} DPG-80, auf einer Walze erfolgte bei 70°C.

**Tabelle 2: Kautschuk-Rezepturen**

| Beispiel | 1 | 2 | 3 |
|---|---|---|---|
| erfindungsgemäß ja/nein | nein | ja | ja |
| BUNA^{®} CB 24 | 30 | 30 | 30 |
| BUNA^{®} VSL 4526-2 HM | 96 | 96 | 96 |
| CORAX^{®} N 339 | 6,4 | 6,4 | 6,4 |
| TUDALEN^{®} 1849-TE | 8 | 8 | 8 |
| PALMERA^{®} A 9818 | 1 | 1 | 1 |
| ANTILUX^{®} 654 | 1,5 | 1,5 | 1,5 |
| AVOZINC Rotsiegel | 2,5 | 2,5 | 2,5 |
| VULKACIT^{®} CZ/C | 1,5 | 1,5 | 1,5 |
| MAHLSCHWEFEL 90/95 CHANCEL | 1,5 | 1,5 | 2,1 |
| VULKANOX^{®} 4020/LG | 1 | 1 | 1 |
| VULKANOX^{®} HS | 1 | 1 | 1 |
| RHENOGRAN^{®} DPG-80 | 2,5 | 2,5 | 2,5 |
| SI^{®} 69 | 6,4 | 6,4 | 6,4 |
| VULKASIL^{®} S | 80 | 80 | 80 |
| LUTENSOL^{®} TO 5 | 0 | 5,0 | 5,0 |

### Technische Prüfung

Die bei 170°C aus den Kautschukmischungen der Beispiele 1 bis 3 hergestellten Vulkanisate wurden den unten angegebenen technischen Prüfungen unterzogen. Die ermittelten Werte sind der Tabelle 3 zu entnehmen.

Sehr gute Eigenschaften der Kautschukmischungen bzw. ihrer Vulkanisate wurden erreicht, wenn sich ihre Eigenschaftswerte in dem angegebenen "bevorzugten Bereich" befinden.

Für die Tests an Prüfkörpern wurden folgende Testverfahren angewandt:

### Verwendetes Rheometer (Vulkameter) und An-/ Ausvulkanisationszeit

Der Vulkanisationsverlauf am MDR (moving die rheometer) und dessen analytischen Daten wurden an einem Monsanto-Rheometer MDR 2000 nach ASTM D5289-95 gemessen.

Als Anvulkanisationszeit (Scorch-Zeit, t5) wird die Zeit bestimmt, bei der 5% des Kautschuks vernetzt sind. Die gewählte Temperatur betrug 130°C.

Als Ausvulkanisationszeit (t95) wird die Zeit bestimmt, bei der 95% des Kautschuks vernetzt sind. Die gewählte Temperatur betrug 170°C.

### Bestimmung des Modul 300

Diese Messungen erfolgten nach DIN 53504 (Zugversuch Stab S 2) bei einer Temperatur von 23°C.

### Bestimmung der Shore-A-Härte

Die Messungen erfolgten bei Raumtemperatur (RT) gemäß DIN 53 505.

### Bestimmung des Rollwiderstandes

Der Verlustfaktor tan δ wurde bei 60°C gemäß dynamischer Dämpfung DIN 53513 bestimmt.

**Tabelle 3: Prüfwerte**

| Beispiel | 1 | 2 | 3 |
|---|---|---|---|
| erfindungsgemäß ja/nein | nein | ja | ja |
| Anvulkanisationzeit (t5) [s] | 1279 | 1342 | 1234 |
| Ausvulkanisationszeit (t95) [s] | 1157 | 708 | 688 |
| Modul 300 [MPa] | 15,7 | 13,5 | 15,7 |
| Härte [Shore A] | 69 | 68 | 69 |
| Verlustfaktor tan δ bei 60°C | 0,117 | 0,113 | 0,100 |

### Fazit:

Überraschend wurde gefunden, dass mit den erfindungsgemäßen Kautschukmischungen gemäß Beispielen 2 und 3 eine kürzere Ausvulkanisationszeit (t95) sowie ein deutlich niedrigerer Verlustfaktor tan δ bei 60°C im Vergleich zu der nicht erfindungsgemäßen Kautschukmischung des Beispiels 1 (entsprechend der Zusammensetzung der Referenzmischung aus EP2858831A1) erreicht wird, bei nahezu gleichbleibenden weiteren mechanischen Eigenschaften. Mit der erfindungsgemäßen Mischung 3 wurde ein niedrigerer Verlustfaktor tan δ bei 60°C im Vergleich zu der nicht erfindungsgemäßen Kautschukmischung des Beispiels 1 erreicht, bei gleichem Modul 300 und Härte.

Es wurde mit den erfindungsgemäßen Kautschukmischungen gemäß Beispielen 2 und 3 sogar eine verbesserte Anvulkanisationszeit (t5) erreicht in Vergleich zu der Kautschukrezeptur 1 aus EP2858831A1 sowie mit der erfindungsgemäßen Kautschukmischung gemäß Beispiel 3 sogar ein niedrigerer Verlustfaktor tan δ bei 60°C.

Die erfindungsgemäßen Kautschukmischungen 2 und 3 zeigten keine Stippen auf der Oberfläche, so dass von einer guten Vermischung der verwendeten Additive ausgegangen wird.

## Patentansprüche

1. Kautschukmischung, enthaltend
- 50 bis 100 phr mindestens eines Synthesekautschuks, bevorzugt BR -Kautschuk und/oder SBR-Kautschuk,
- 0 bis 50 phr mindestens eines Naturkautschuks,
- 0,1 bis 200 phr mindestens eines hydroxylgruppenhaltigen oxidischen Füllstoffs,
- 0 bis 120 phr mindestens eines Ruß, bevorzugt 0,1 bis 100 phr,
- 0,1 bis 20 phr mindestens eines Vernetzers, bevorzugt ausgewählt aus der Reihe der Schwefelspender und/oder Schwefel,
sowie
0,5 bis 10 phr der mindestens einen ethoxylierten Verbindung der Formel (I)
RO(CH₂CH₂O)ₓH (I)
worin
R für Alkyl steht, wobei Alkyl verzweigt oder unverzweigt sein kann,
und
x für eine ganze Zahl von 1 bis 20
steht.

2. Kautschukmischung gemäß Anspruch 1, **dadurch gekennzeichnet, dass** R für C₁-C₂₀-Alkyl, bevorzugt für C₅-C₁₇-Alkyl steht, besonders bevorzugt für C₁₀-C₁₅-Alkyl, ganz besonders bevorzugt für *iso*-C₁₃-Alkyl, ganz ganz besonders bevorzugt für *iso-*C₁₃H₂₇.

3. Kautschukmischung gemäß einem der Ansprüche 1 oder 2, **dadurch gekennzeichnet, dass** x für eine ganze Zahl von 2 bis 15 steht, bevorzugt von 3 bis 10, besonders bevorzugt von 4 bis 6, ganz besonders bevorzugt 5 ist.

4. Kautschukmischung gemäß einem der Ansprüche 1-3, **dadurch gekennzeichnet, dass** der mindestens eine Synthesekautschuk ausgewählt ist aus der Gruppe bestehend aus polaren und unpolaren Synthesekautschuken, bevorzugt ausgewählt aus der Gruppe bestehend aus SBR- und BR-Kautschuk.

5. Kautschukmischung gemäß einem der Ansprüche 1-4, **dadurch gekennzeichnet, dass** der mindestens eine hydroxylgruppenhaltige oxidische Füllstoff ausgewählt ist aus der Gruppe bestehend aus Kieselsäuren, synthetischen Silikaten und natürlichen Silikaten, und in einer Menge von 0,1 bis 200 phr, bevorzugt 20 bis 160 phr , besonders bevorzugt von 25 bis 140 phr, ganz besonders bevorzugt 30 - 120 phr in der Kautschukmischung enthalten ist.

6. Kautschukmischung gemäß einem der Ansprüche 1-5, **dadurch gekennzeichnet, dass** sie 0,1 bis kleiner als 1,8 phr, bevorzugt 1,0 bis 1,7 phr, besonders bevorzugt 1,3 bis 1,7 phr an Schwefel in dem mindestens einen Vernetzer enthält.

7. Kautschukmischung gemäß einem der Ansprüche 1-5, **dadurch gekennzeichnet, dass** sie 1,8 bis 20 phr, bevorzugt 1,9 bis 8,0 phr, besonders bevorzugt 1,9 bis 5 phr, ganz besonders bevorzugt 1,9 bis 3 phr an Schwefel in dem mindestens einen Vernetzer enthält.

8. Kautschukmischung gemäß einem der Ansprüche 1-7, **dadurch gekennzeichnet, dass** sie mindestens ein Verstärkungsadditiv aus der Reihe der schwefelhaltigen organischen Silane, insbesondere der Alkoxysilylgruppen-haltigen schwefelhaltigen Silane und besonders bevorzugt der Trialkoxysilylgruppen-haltigen schwefelhaltigen organischen Silane enthält.

9. Kautschukmischung gemäß Anspruch 1, **dadurch gekennzeichnet, dass** sie
- 50 bis 100 phr mindestens eines synthetischen Kautschuks, insbesondere BR - Kautschuk und/oder SBR-Kautschuk,
- 20 bis 160 phr mindestens einer Kieselsäure, insbesondere mit einer spezifischen Oberfläche (BET) von 5 bis 1000, bevorzugt 20 bis 400 m²/g, und mit Primärteilchengrößen von 100 bis 400 nm,
- 0,1 bis 100 phr mindestens eines Ruß, insbesondere mit einer spezifische Oberfläche (BET) im Bereich von 20 bis 200 m²/g,
- 0,5 bis 10 phr mindestens eines Vernetzer, insbesondere aus der Reihe der Schwefelspender und/oder Schwefel,
- 0,1 bis 10 phr Zinkoxid,
- 0,5 bis 10 phr mindestens eines Vulkanisationsbeschleunigers, insbesondere aus der Reihe der Sulfenamide,
- 0,1 bis 10,0 phr mindestens eines Sekundärbeschleunigers,
- 0,5 bis 15 phr mindestens eines Verstärkungsadditives, insbesondere aus der Gruppe der schwefelhaltigen Silane
- 0,1 bis 30 phr Kautschukhilfsmittel
und
- 0,5 bis 10,0 phr der mindestens einen ethoxylierten Verbindung der Formel (I) enthält.

10. Verfahren zur Herstellung der erfindungsgemäßen Kautschukmischungen nach einem der Ansprüche 1-9, **dadurch gekennzeichnet, dass** in einem Mischprozess die jeweiligen Komponenten gemischt werden.

11. Verwendung der Kautschukmischungen nach einem der Ansprüche 1-9 zur Herstellung von Vulkanisaten und Kautschukformkörpern aller Art, insbesondere zur Herstellung von Reifen und Reifenbauteilen.

12. Vulkanisat, welches durch Vulkanisation mindestens einer Kautschukmischung nach einem der Ansprüche 1 - 9, bevorzugt bei einer Temperatur von 120 bis 200°C, erhalten wurde.

13. Fahrzeugreifen, **dadurch gekennzeichnet, dass** er wenigstens ein Vulkanisat nach Anspruch 12 aufweist.

14. Verwendung der mindestens einen ethoxylierten Verbindung der Formel (I)
RO(CH₂CH₂O)ₓH (I)
worin
R für Alkyl steht, wobei Alkyl verzweigt oder unverzweigt sein kann,
und
x für eine ganze Zahl von 1 bis 20
steht,
zur Herstellung von Vulkanisaten mit niedrigem Rollwiderstand aus schwefelvernetzbaren Kautschukmischungen, insbesondere in einer Menge von 0,5 bis 10,0 phr bei einer Vulkanisationstemperatur von 120 bis 200°C.

15. Verwendung der mindestens einen ethoxylierten Verbindung der Formel (I)
RO(CH2CH2O)xH (I)
worin
R für Alkyl steht, wobei Alkyl verzweigt oder unverzweigt sein kann,
und
x für eine ganze Zahl von 1 bis 20
steht,
in Kautschukmischungen, -vulkanisaten und daraus erhältlichen Formkörpern zur Reduzierung des Rollwiderstandes von Formkörpern aus Kautschukvulkanisaten, bevorzugt von Reifen und Reifenteilen.
